# FASCICULE DE BREVET EUROPEEN

(11) **EP 0 389 356 B1**
(45) Date de publication et mention de la délivrance du brevet: **19.01.1994**
(21) Numéro de dépôt: 90400747.3
(22) Date de dépôt: 20.03.1990
(51) Int. Cl.: A01G 31/00

(54) **Substrat pour la culture hors-sol**
Substrat für erdlose Kultur
Substrate for soilless culture

(30) Priorité: 21.03.1989 FR 8903652
(43) Date de publication de la demande: 26.09.1990
(73) Titulaire: ISOVER SAINT-GOBAIN, F-92400 Courbevoie (FR)
(72) Inventeur: Kafka, Bernard, Auvilliers, F-60290 Rantigny (FR); Robert, Marie-Agnès, F-92250 La Garenne Colombes (FR)
(74) Mandataire: Le Vaguerèse, Sylvain Jacques

(56) Documents cités:
- EP-A- 0 201 426
- GB-A- 2 200 024

## Description

L'invention concerne les techniques de culture hors-sol. Plus précisément, l'invention se rapporte aux techniques dans lesquelles la culture met en jeu plusieurs étapes successives de croissance des plantes, chaque étape conduisant à l'utilisation d'un substrat offrant un volume supérieur à celui du précédent pour permettre un développement satisfaisant du système racinaire de la plante.

Dans les modes intensifs de culture hors-sol, une bonne gestion des matériaux et de l'espace disponible conduit à une succession d'étapes correspondant à la mise en oeuvre de substrats spécifiques.

Le mode le plus répandu à l'heure actuelle dans les cultures hors-sol en serre comporte ainsi au moins deux étapes successives. La première étape correspond à la croissance initiale des plants. Ceux-ci étant peu volumineux et présentant un développement limité du système racinaire, le professionnel utilise de préférence à ce stade un substrat de volume restreint. Ceci permet de multiplier le nombre de plants cultivés sur un espace limité. Cela permet aussi de minimiser le volume de solution nutritive nécessaire pour entretenir le substrat dans les conditions adéquates pour le développement des plants. Dans une deuxième étape, les plants qui ont grandi sur ces substrats de volume limité sont disposés, avec le premier substrat, sur un deuxième substrat offrant un volume plus important, et ordinairement espacés les uns des autres.

L'invention est relative aux substrats minéraux sur lesquels sont développés les plants ne requérant qu'un volume limité dont l'ordre de grandeur est de 1 dm³. Plus précisément, l'invention est relative à des substrats en fibres minérales tels que ceux constitués de laine de verre ou de laine de roche.

Les substrats considérés selon l'invention sont de forme générale parallélépipèdique. Cette forme est celle qui, du point de vue des producteurs comme des utilisateurs, est sensiblement la plus pratique. Le transport de ces substrats, en évitant tout volume perdu, en est amélioré. Leur production en est aussi beaucoup facilitée et se prête à une automatisation poussée. Ces avantages sont très sensibles pour des produits qui doivent nécessairement être proposés à des prix très bas. Pour l'utilisateur, la forme parallélépipèdique permet des regroupements commodes sur une surface réduite de ces éléments dans les stades de la culture où les plants étant peu développés, il est avantageux de minimiser la surface occupée.

Pour la commodité de l'exposé, nous désignerons dans la suite ces éléments de substrats sous la nom de "cubes" étant entendu qu'ils ne présentent pas nécessairement, ni même généralement, une forme vraiment cubique. Ce nom est néanmoins choisi car il correspond à celui qui est ordinairement retenu par les utilisateurs.

Il est nécessaire pour bien comprendre le problème que se propose de résoudre l'invention de détailler davantage le mode usuel d'utilisation de ces "cubes".

Dans les modes de culture intensive qui représentent les débouchés les plus significatifs pour ce type de produits que sont les "cubes", ceux-ci sont dans un premier temps disposés les uns contre les autres sur une large surface. Dans ce type d'arrangement, il est nécessaire d'aménager à la fois une irrigation satisfaisante et une aération convenable pour assurer la croissance la plus complète et la plus rapide des plants. L'irrigation peut être effectuée soit par la partie supérieure des cubes, soit par leur base, c'est-à-dire la partie reposant sur le sol. En pratique, les deux modes peuvent être combinés. Souvent les cubes sont disposés dans un ensemble qui forme une sorte de bac capable de recevoir la solution d'irrigation pour immerger partiellement les cubes. La solution s'élève à un niveau suffisant par rapport à la hauteur des cubes pour que ceux-ci soient entièrement imbibés. Pour des cubes d'une dizaine de centimètres de hauteur, le niveau temporaire de la solution d'irrigation atteint par exemple le tiers de la hauteur du cube. La solution s'élève ensuite dans le substrat par capillarité. Cette irrigation effectuée, la solution d'irrigation est évacuée et récupérée pour une opération ultérieure. Ce type d'opération d'irrigation est renouvelé suivant un rythme dépendant à la fois de la culture considérée et des conditions ambiantes (saison, température, évaporation...). Après un certain développement des plants, il est usuel d'écarter les cubes les uns des autres pour offrir plus d'espace et de lumière. A ce stade encore, l'irrigation est avantageusement conduite comme indiqué ci-dessus, mode que l'on désigne par le terme de "subirrigation".

Dans ces étapes de la culture sur cubes, nous avons vu comment pouvait être effectuée l'irrigation. Nous avons dit aussi qu'il était nécessaire d'assurer une bonne aération des racines entre les irrigations successives. Cette aération est une condition nécessaire au bon développement de celles-ci. Les cubes traditionnels utilisés présentent une base plane reposant entièrement sur le sol ou, plus exactement, sur le fond du bac ou encore sur le revêtement, le plus souvent un film imperméable recouvrant le sol et isolant les cubes de celui-ci. Dans toutes ces applications, une difficulté apparaît. La face inférieure des cubes tend, au contact du support sur lequel elle repose, à maintenir un film liquide après que l'irrigation ait cessé. En d'autres termes, lorsque l'on évacue la solution d'irrigation, que celle-ci ait été introduite par subirrigation ou par irrigation par la face supérieure des cubes, le contact entre le cube et son support entretient, par ce que l'on peut nommer un effet de surface, un film liquide continu qui s'oppose au drainage normal du cube sous l'effet de la gravité. Dans ces conditions, la rétention d'eau se trouve prolongée de façon substantielle compromettant l'établissement du rapport air/eau le plus favorable.

Pour rétablir un drainage rapide de la solution après chaque opération d'irrigation, une technique développée chez les utilisateurs a été de disposer sous les cubes un matériau poreux ou des caillebotis qui en rompant le contact entre les cubes et leur support éliminent cet effet de surface. Ces moyens ont cependant l'inconvénient de compliquer l'entretien des aires de culture. Ils doivent notamment être stérilisés entre chaque nouvelle culture. Une autre solution utilisée dans EP-A-0 176 134 a consisté a ménager des rainures sur la face inférieure des cubes. Ces rainures, qui présentent de l'ordre de 1 à 2 centimètres de profondeur et de largeur, fractionnent le film d'une façon qui améliore le drainage et, par suite, l'aération des cubes. Ces rainures permettent de réduire la surface de contact d'environ un tiers et le retour à un équilibre air/eau approprié dans un délai sensiblement écourté après chaque irrigation. Il reste cependant à la base du cube une surface encore très conséquente en contact avec le support et, même réduit, le film liquide sous-jacent reste présent à ces points de contact.

Par ailleurs, l'utilisation des rainures à la base des cubes fait que, dans la phase finale lorsque ces cubes sont posés sur des pains de culture, le contact ne peut être complet. A l'emplacement des rainures, le contact ne peut s'effectuer ce qui rend plus difficile le passage des racines du cube vers le pain.

EP-A-0 176 134 divulgue un substrat pour la culture de plants constitué d'un feutre de fibres minerales de forme parallélépipèdique, du type désigné sous le nom de "cube".

L'invention se propose de fournir des substrats de type "cube" pour la culture des plants, de forme parallélépipèdique comportant une cavité sur la face supérieure dont les faces latérales sont revêtues d'un film imperméable et dont la face inférieure, dans la phase de culture sur le cube, est isolée du support sur lequel il est placé, et dans la phase de culture sur cube et pain, est en contact complet avec la partie correspondante du pain.

Pour obtenir ce double effet, on dispose sur la face inférieure de chaque cube des pieds rapportés qui présentent une partie effilée qui est enfoncée dans le feutre du substrat, un moyen d'arrêt en venant en butée sur la face inférieure, et une partie fermant le pied proprement dit qui fait saillie sur la face inférieure, permettant d'isoler le cube de son support.

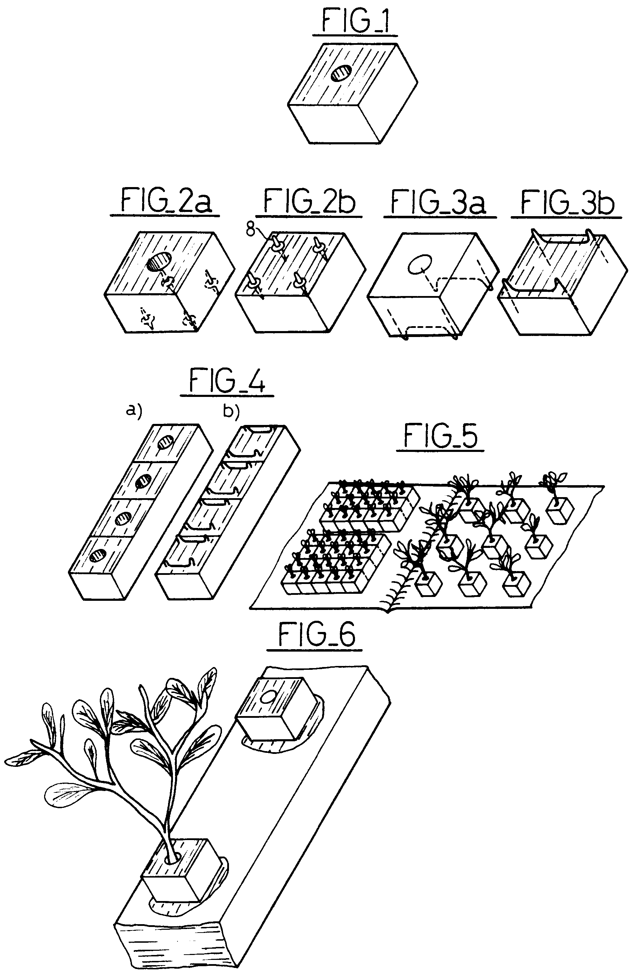

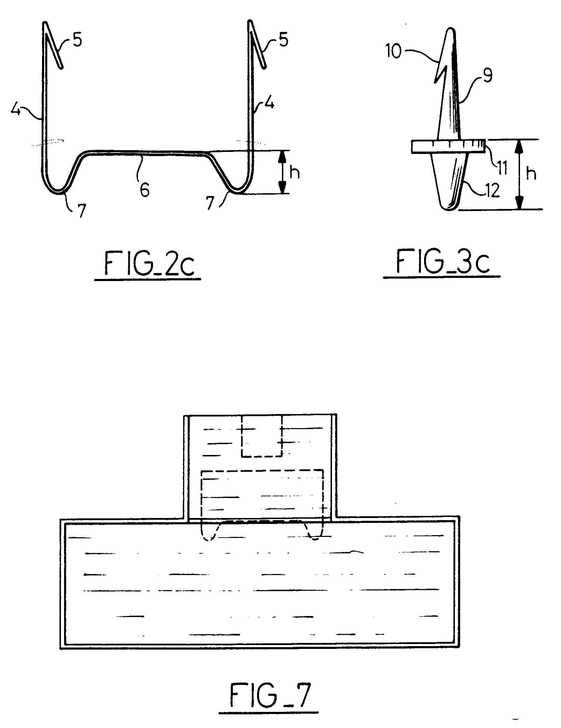

L'invention est décrite, de façon plus détaillée, dans la suite de la description en faisant référence aux planches de dessins dans lesquelles :
. **la figure** **1** représente un substrat sous forme de cube traditionnel,
. **les figures 2a et 2b** montrent, en perspective de dessus et de dessous, un substrat selon l'invention,
. **la** **figure 2c** montre, en agrandissement, le type de pied utilisé dans les cubes 2a et 2b,
. **la figure 3a et** **3b** montrent, en perspective de dessus et de dessous, un autre mode de réalisation selon l'invention,
. **la figure 3c** montre, en agrandissement, le pied utilisé en 3a,
. **les figures 4a et 4b** présentent un ensemble de cubes vus de dessus et de dessous,
. **la** **figure** **5** montre, schématiquement, un mode d'utilisation des cubes dans les premières étapes de la culture des plants,
. **la figure** **6** montre l'utilisation des cubes sur les pains de culture,
. **la figure** **7** est une coupe transversale montrant le mode d'assemblage cube/pain.

Le "cube" représenté est de forme traditionnelle pour les substrats laine de verre ou laine de roche. Ses dimensions, à titre indicatif, sont par exemple une base carrée de 120 x 120 mm et une hauteur de 75 mm.

A sa partie supérieure, le cube comporte une cavité pour recevoir soit une graine préalablement germée sur un support dont la forme correspond à celle de la cavité, soit directement une graine. Dans les exploitations les plus importantes, il est usuel de procéder à la germination de façon séparée, ce qui permet encore un gain de place et améliore la rentabilité des installations en réduisant le temps d'immobilisation des surfaces disponibles.

Le cube est revêtu d'un film imperméable sur ses faces latérales. Ce film a pour but de réduire la surface du substrat exposée à l'air ambiant dans les stades ultimes de la culture lorsque les cubes sont séparés les uns des autres (y compris lorsqu'ils sont disposés sur les pains de culture comme nous l'indiquerons ci-après à propos de la figure 6). En réduisant l'exposition à l'air ambiant on limite l'évaporation et les risques d'assèchement du substrat et la nécessité de rapprocher les alimentations successives en solution.

Les figures 2a et 2b montrent, en perspective, un cube selon l'invention. Il s'agit d'un cube de forme traditionnelle mais comportant sur sa face inférieure des pieds rapportés sur lesquels le cube repose.

Dans la forme représentée, le pied est constitué d'un fil suffisamment rigide pour supporter le poids du cube même lorsque celui-ci est imbibé. Le fil est, par exemple, un fil métallique revêtu d'un matériau protecteur pour éviter son oxydation.

La forme représentée en détail à la figure 2c montre une partie effilée (4) destinée à pénétrer dans le feutre de fibres. Les cas échéant, comme représenté, l'extrémité (5) de la partie effilée forme harpon ou crochet pour que, une fois enfoncée dans la masse du feutre, elle reste fixée en position.

Dans le mode représenté, un élément unique forme simultanément deux pieds. Le même fil rigide convenablement conformé présente deux extrémités effilées en broche ou harpon. La partie médiane (6) sert de moyen d'arrêt de la pénétration dans le feutre. Lorsque cette partie médiane vient en butée contre le feutre, même si le feutre peut être légèrement déformé par la pression exercée par cette partie médiane, son allongement parallèlement au feutre empêche sa pénétration, la surface d'appui étant trop importante.

A ce propos, les matériaux des cubes, qu'il s'agisse de fibres de verre ou de fibres de roche, sont choisis suffisamment "rigides" pour qu'ils ne se déforment pas sensiblement sous l'effet de leur propre poids, mêmes lorsqu'ils sont imbibés de solution d'irrigation. Ceci est obtenu en choisissant des feutres dont la densité est suffisante d'une part et dont la structure renforce la rigidité.

En particulier, l'orientation dominante des fibres peut être choisie de façon à améliorer la résistance à l'écrasement. Il est possible aussi de rendre ces feutres plus résistants par un enchevêtrement plus homogène des fibres. On peut encore, dans une certaine mesure, choisir les dimensions des fibres (diamètre, longueur) selon les principes connus pour déterminer les caractéristiques mécaniques dans les applications isolation de ce type de feutres.

Les pieds (7) sont constitués par des boucles formées dans le fil lui-même. Leur forme peut être plus ou moins évasée. Il peut être préférable de ne pas les faire trop acérés s'ils doivent reposer sur un film imperméable canalisant les solutions d'irrigation. Par ailleurs, comme nous le verrons ci-dessous, il est utile que le pied lui-même puisse agir d'une certaine façon comme broche.

Lorsque les cubes dans les dernières étapes de la culture sont disposés sur les pains, il est nécessaire en effet que ces pieds ne constituent pas un obstacle à l'application du cube de telle sorte qu'il y ait un contact continu entre la face inférieure du cube et la face supérieure du pain. La figure 7 montre, en coupe, cette disposition. Par mesure de simplification de la manutention, il est préférable de ne pas avoir à retirer le pied avant de disposer le cube sur le pain. Lorsque le pied ne présente pas une surface trop importante, et compte tenu du fait que la résistance offerte à la pénétration par les fibres constituant le pain est relativement limitée, une pression modérée permet de faire rentrer les pieds (7) dans le pain sans endommager celui-ci.

L'utilisation de pieds comme on vient de l'indiquer présente, par ailleurs, un autre avantage. Au cours de la culture des plants, la fixation sur un espalier est une opération très fréquente, par exemple dans la culture des tomates. Pour obtenir cette fixation, on est conduit é effectuer des tractions modérées sur le plant pour l'amener vers l'espalier. Quand cette opération est conduite relativement tôt après la mise en place du cube sur le pain et que les racines passant de l'un à l'autre sont peu développées, le cube peut avoir tendance à basculer, rompant ainsi le contact cube-pain qui est nécessaire au bon développement des racines. La présence des pieds (7) qui sont enfoncés dans le feutre du pain, comme représenté à la figure 7, permet une meilleure solidarisation de ces deux substrats et s'oppose au déplacement de l'un par rapport à l'autre.

La hauteur des pieds h est choisie de manière à bien permettre le drainage c'est-à-dire, comme nous l'avons vu, elle doit maintenir la face inférieure du cube à une distance suffisante pour que la solution d'irrigation ne puisse se maintenir entre le cube et le sol. Pour cela, quelques millimètres suffisent. Il est préférable aussi, pour éviter que des racines ne se développent hors du cube, que l'aération soit suffisante et donc la hauteur également. Dans la pratique, cette hauteur est de préférence choisie entre 5 et 20 mm.

Lorsque la hauteur est suffisante, on constate qu'en dehors du fait qu'un drainage satisfaisant est obtenu, les racines se développent mieux que dans les cubes de forme traditionnelle. Dans la pratique, les racines qui tendent de préférence à gagner la base du cube se trouvent stoppées dans leur progression par le contact avec l'air. Il se crée alors des ramifications latérales qui favorisent une colonisation plus complète de la masse du cube et une meilleure utilisation de celui-ci.

La figure 3a présente une autre forme de réalisation de l'invention dans laquelle les pieds sont constitués par une sorte de broche (8) dont la constitution est détaillée à la figure 3c.

La broche (8) comprend, comme précédemment, une partie effilée (9) dont l'extrémité est de préférence en forme de harpon (10) de manière à l'immobiliser dans le feutre du cube. Une bague d'arrêt (11) limite la pénétration dans le cube. Le pied lui-même (12) est de préférence suffisamment effilé pour pénétrer dans le matériau d'un substrat de constitution analogue à celle du cube. De cette façon, comme vous l'avons vu, le cube est commodément fixé sur le pain.

La broche (8) est, par exemple, en un matériau macromoléculaire suffisamment rigide, par exemple en polystyrène ou en polychlorure de vinyle.

Dans les exemples présentés, il est avantageux de disposer les pieds lors de la fabrication des cubes pour minimiser les manipulations chez l'utilisateur.

Les cubes, pour des raisons de commodité, sont ordinairement commercialisés par rangées formées de plusieurs cubes rassemblés, comme représenté à la figure 4. Les cubes sont alors généralement réunis les uns aux autres au moyen de bandes latérales adhésives qui, ultérieurement, peuvent être soit retirées, soit découpées pour individualiser les cubes. Les bandes adhésives, dans ce cas, sont appliquées sur le film imperméable qui entoure les faces latérales du cube.

Dans le stockage et le conditionnement, les rangées de cubes sont superposées en plusieurs épaisseurs. La présence des pieds sur les cubes ne contrarie pas ce code d'assemblage dans la mesure où, comme nous l'avons précisé, la configuration du pied est choisie de manière à ce que celui-ci puisse pénétrer sous une simple pression dans un feutre analogue à celui constituant le cube.

Dans ce conditionnement, on comprend également l'intérêt qu'il y a à pourvoir la partie pénétrant dans le cube sous forme d'un harpon ou d'un crochet. En effet, lorsque l'on sépare deux rangées de cubes, il est nécessaire de bien maintenir en place la partie (4 , 9) dans le cube, alors que l'extraction du pied du cube placé en dessous, exerce nécessairement une traction qui, bien que modérée, pourrait conduire au retrait du pied de sa position.

La figure 5 représente, en coupe, un bac de culture des plants. Deux stades successifs de la culture y sont montrés. Dans le premier stade, représenté dans la partie gauche, les rangées de cubes telles que celles de la figure 4 sont disposées de façon contiguë sur le fond du bac d'irrigation. Dans le second stade, représenté à droite, les cubes sont désolidarisés et écartés les uns des autres.

Dans ce deuxième stade de la culture, la subirrigation des cubes traditionnels peut conduire au déplacement de ceux-ci à l'occasion des opérations de subirrigation. En effet, surtout si le sol n'est pas parfaitement horizontal ce qui peut être préféré pour améliorer le drainage, les cubes peuvent glisser sur le film liquide. L'absence de ce film selon l'invention écarte tout risque de déplacement des plants et donc l'obligation de rétablir manuellement une répartition momentanément compromise.

La figure 6 montre le dernier stade de la culture. Les cubes sont disposés sur les pains plus volumineux. Ordinairement, les pains sont aussi revêtus d'un film imperméable qui limite les pertes par évaporation. Le film en question ménage, à la partie supérieure, des ouvertures correspondant aux emplacements des cubes.

Comme indiqué précédemment, il est important d'assurer un bon contact entre le cube et le pain. Celui-ci est obtenu automatiquement lorsque la base des cubes est parfaitement plane, alors qu'il ne peut pas être complet avec les cubes présentant des rainures.

L'usage des cubes selon l'invention assure un contact complet des deux substrats de culture et, en outre, l'usage des pieds, comme nous l'avons vu, permet une meilleure solidarisation des cubes et des pains.

## Revendications

1. Substrat pour la culture de plants constitué d'un feutre de fibres minérales de forme parallélépipèdique, du type désigné sous le nom de "cube" et présentant sur sa face inférieure des pieds (7, 12) rapportés comportant une partie effilée (4, 9) qui est enfoncée dans le feutre du substrat, un moyen d'arrêt (6, 11) de la pénétration du pied dans le feutre venant en butée sur la face inférieure et une partie formant un pied proprement dit qui fait saillie sur la face inférieure du substrat.

2. Substrat selon la revendication 1 dans lequel la partie du pied (7, 12) faisant saillie présente une section suffisamment petite pour pouvoir pénétrer par simple pression dans un feutre de même nature que celui du substrat.

3. Substrat selon la revendication 2 dans lequel les pieds sont constitués d'un fil rigide présentant deux extrémités (4) s'enfonçant dans le feutre, une partie médiane (6) sur laquelle repose le substrat formant le moyen d'arrêt et deux parties recourbées (7) dans le prolongement des parties effilées (4) constituant les pieds.

4. Substrat selon la revendication 3 dans lequel les parties effilées forment harpon (5) ou crochet.

5. Substrat selon la revendication 2 dans lequel les pieds sont constitués par une broche (8) comprenant une partie effilée (9), une bague d'arrêt (11) et un pied proprement dit (12).

6. Substrat selon la revendication 5 dans lequel l'extrémité de la partie effilée (9) du pied forme harpon (10).

7. Substrat selon l'une des revendications précédentes dans lequel la hauteur des pieds est comprise entre 5 et 15 mm.

## Patentansprüche

1. Substrat für Pflanzenaufzucht aus einem parallelepipedförmigen Mineralfaserfilz von der als "Block" bezeichneten Art, welcher auf seiner Unterfläche angesetzte Füße (7, 12) aufweist, mit einem spitz zulaufenden, im Filz des Substrats versenkten Abschnitt (4, 9), einem Anschlag (6, 11) gegen das Eindringen der Füße in den Filz, welcher gegen die Bodenfläche zu liegen kommt, und einem von der Bodenfläche des Substrats abstehenden Abschnitt, welcher einen eigentlichen Fuß bildet.

2. Substrat nach Anspruch 1, bei dem der abstehende Abschnitt des Fußes (7, 12) einen ausreichend kleinen Querschnitt aufweist, um durch einfachen Druck in einen Filz von der gleichen Art wie der des Substrats eindringen zu können.

3. Substrat nach Anspruch 2, bei dem die Füße aus einem starren Draht bestehen, welcher zwei in den Filz versenkte Enden (4) aufweist, einen den Anschlag bildenden Mittelabschnitt (6), auf welchem das Substrat ruht, sowie zwei umgebogene Abschnitte (7) als Verlängerung der spitz zulaufenden Abschnitte, welche die Füße darstellen.

4. Substrat nach Anspruch 3, bei dem die spitz zulaufenden Abschnitte Widerhaken (5) oder Haken bilden.

5. Substrat nach Anspruch 2, bei dem die Füße aus einem Stift (8) bestehen, welcher einen spitz zulaufenden Abschnitt (9), einen Stellring (11) und einen eigentlichen Fuß (12) aufweist.

6. Substrat nach Anspruch 5, bei dem das Ende des spitz zulaufenden Abschnitts (9) des Fußes einen Widerhaken (10) bildet.

7. Substrat nach einem der vorangegangenen Ansprüche, bei dem die Höhe der Füße zwischen 5 und 15 mm liegt.

## Claims

1. Substrate for plant culture, consisting of a parallelepipedal mineral fibre felt of the type designated by the name "cube" and comprising, on its underside, attached feet (7,12) comprising a sharpened portion (4,9) which is pushed into the felt of the substrate, a means (6,11) of stopping the penetration of the foot into the felt coming into contact with the underside, and a part forming the foot proper, which projects from the underside of the substrate.

2. Substrate according to claim 1, in which the projecting part of the foot (7,12) has a cross-section which is sufficiently small for it to be able to penetrate into a felt of the same type as that of the substrate as a result of simple pressure.

3. Substrate according to claim 2, in which the feet consist of a rigid wire having two ends (4) which are pushed into the felt, a central portion (6) on which there rests the substrate forming the stopping means, and two curved portions (7) in the extension of the sharpened portions (4) forming the feet.

4. Substrate according to claim 3, in which the sharpened parts form a harpoon (5) or hook.

5. Substrate according to claim 2, in which the feet are consitituted by a pin (8) comprising a sharpened part (9), a stop ring (11), and a foot proper (12).

6. Substrate according to claim 5, in which the end of the sharpened part (9) of the foot forms a harpoon (10).

7. Substrate according to any one of the preceding claims, in which the height of the feet is between 5 and 15mm.
